# EUROPÄISCHE PATENTANMELDUNG

(11) **EP 1 892 153 A2**
(43) Veröffentlichungstag der Anmeldung: **27.02.2008**
(21) Anmeldenummer: 07012923.4
(22) Anmeldetag: 02.07.2007
(51) Int. Cl.: B60R 9/10

(54) **Tragvorrichtung für ein Fahrrad**

(30) Priorität: 08.07.2006 DE 102006031693
(71) Anmelder: Magna Car Top Systems GmbH, 74321 Bietigheim-Bissingen (DE)
(72) Erfinder: Bergerhoff, Harald, 22143 Hamburg (DE); Waller, Michael, 22549 Hamburg (DE); Hahn, Gerald, 21255 Wistedt (DE)

(57) **Zusammenfassung**

Diese Trageinrichtung für ein Fahrrad ist für ein Kraftfahrzeug, insbesondere einen Personenkraftwagen geeignet und umfasst eine Aufnahmesäule für einen Kurbelarm einer Treteinrichtung des Fahrrads.

Um diese Trageinrichtung bezüglich Funktion zu verbessern, ist die Aufnahmesäule aus einer liegenden Stellung in eine aufrechte Stellung und vice versa bewegbar, wobei die Aufnahmesäule zumindest in der aufrechten Stellung mittels einer Stützeinrichtung festgelegt ist.

## Beschreibung

Die Erfindung bezieht sich auf eine Tragvorrichtung, die in einem Kraftfahrzeug, insbesondere Personenkraftwagen angeordnet ist, nach dem Oberbegriff des Patentanspruchs 1.

Es ist ein Fahrradträger für ein Kraftfahrzeug bekannt, US 5,025,932, mit dem zwei nebeneinander stehende Fahrräder transportiert werden können. Dieser Fahrradträger besitzt ein jeweils zwei Räder der Fahrräder aufnehmende Schienen und aufrechte, hohle Säulen. Jede Säule ist zur Einführung eines Kurbelarms einer Tretvorrichtung des Fahrrads ausgebildet, wobei der Kurbelarm mittels eines den Querschnitt der Säule schließenden Deckels in axialer Richtung gesichert ist.

Aus der DE 697 08 988 T2 geht ein Fahrradträger mit einer Klemmvorrichtung hervor, die zur Arretierung eines Fahrrads geeignet ist, und zwar ungeachtet der Form eines Tretlagerarms des Fahrrads. Die Klemmvorrichtung ist mit einer Stütze für ein Achsgehäuse eines Tretlagers des Fahrrads versehen. Die Stütze ist über eine Welle, die sich quer zur Längsrichtung eines Ständers erstreckt, kippbar ausgebildet. Dadurch besteht die Möglichkeit sowohl gerade wie auch gekröpfte Tretlagerarme aufzunehmen.

Die DE 94 20 632 U1 -Anlage 3- befasst sich mit einem Fahrradträger für Personenkraftwagen, bei dem ein Lagerträger zur Aufnahme eines Tretlagerarms eines Fahrrads vorgesehen ist. Die Aufnahme umfasst ein unteres festes Auflageelement und ein oberes in Querrichtung des Lagerträgers verstellbares Dachelement, die mit dem Tretlagerarm zusammenwirken. Der Lagerträger ist im Querschnitt C-förmig ausgebildet, und das verstellbare Auflageelement ist mit einer Stellschraube versehen ist. Das zuletzt genannte Auflageelement ist jedoch nicht längsverschiebbar im Lagerträger angeordnet.

In der DE 102 31 963 B4 wird ein aus einem Aufbau eines Kraftfahrzeugs herausziehbarer Lastenträger behandelt, der eine Lastenaufnahme aufweist. Die Lastenaufnahme ist mittels eines Schienensystems verschiebbar im Kraftfahrzeug gelagert. Bestandteil des Lastenträgers ist eine Fixierungseinrichtung, über die die Lastenaufnahme wahlweise in einer eingefahrenen Ruhestellung und einer ausgefahrenen Betriebsstellung festlegbar ist.

Es ist Aufgabe der Erfindung eine Trageinrichtung für ein Fahrrad zu schaffen, die in Verbindung mit einem Kraftfahrzeug, insbesondere Personenkraftwagen, einsetzbar ist und mit wenigstens einer funktionell günstig gestalteten Aufnahmesäule für einen Kurbelarm einer Treteinrichtung des Fahrrads versehen ist.

Diese Aufgabe wird gemäß der Erfindung mit den Merkmalen des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass die Aufnahmesäule aus einer liegenden Stellung in eine aufrechte Stellung bewegbar ist, d.h. die Aufnahmesäule lässt sich in der liegenden Stellung räumlich günstig sowohl in der Trageinrichtung wie auch im Personenkraftwagen anordnen, welche Trageinrichtung mit einem Aufnahmeelement für das Fahrrad versehen sein kann, das aus einer in einen Aufbau des Personenkraftwagens eingeschobenen Ruhestellung in eine aus dem Aufbau ausgefahrene Betriebsstellung verstellbar ist. In der aufrechten Stellung der Aufnahmesäule ist ein Kurbelarm einer Trageinrichtung eines Fahrrads funktionsgerecht in besagte Aufnahmesäule einführ-und festsetzbar. Die Aufnahmesäule wird in ihrer aufrechten Stellung durch eine Stützeinrichtung festgelegt und ist mittels eines aufwandarmen Schwenklagers bewegbar, das an einer Rahmenstruktur der Trageinrichtung vorgesehen ist. Die Stützeinrichtung ist baulich problemlos zwischen Rahmenstruktur und Aufnahmesäule unterbringbar. Das die zwei Lenker bildende Lenkersystem eignet sich vorbildlich als Stützeinrichtung, deren gute Funktion dadurch erzielt wird, dass sie in der aufrechten Stellung des Aufnahmeelements eine gestreckte Totpunktlage einnehmen. Diese Totpunktlage wird durch ein mit vertretbarem Einsatz umsetzbares Sperrsystem gesichert, das an der Aufnahmesäule angebracht und sich durch sinnfällige Bedienbarkeit auszeichnet.

In der Zeichnung wird ein Ausführungsbeispiel gezeigt, das nachsehend näher erläutert wird.

Es zeigen
Fig. 1 eine Schrägansicht auf einen Personenkraftwagen von hinten links oben mit einer Trageinrichtung für ein Fahrrad nach der Erfindung,
Fig. 2 eine Schrägansicht der Trageinrichtung,
Fig. 3 eine schematische Ansicht einer Aufnahmesäule der Trageinrichtung etwa in Pfeilrichtung A der Fig. 2,
Fig. 4 einen Schnitt nach der Linie IV-IV der Fig. 3 in größerem Maßstab,
Fig. 5 eine Einzelheit X der Fig. 2 in größerem Maßstab.

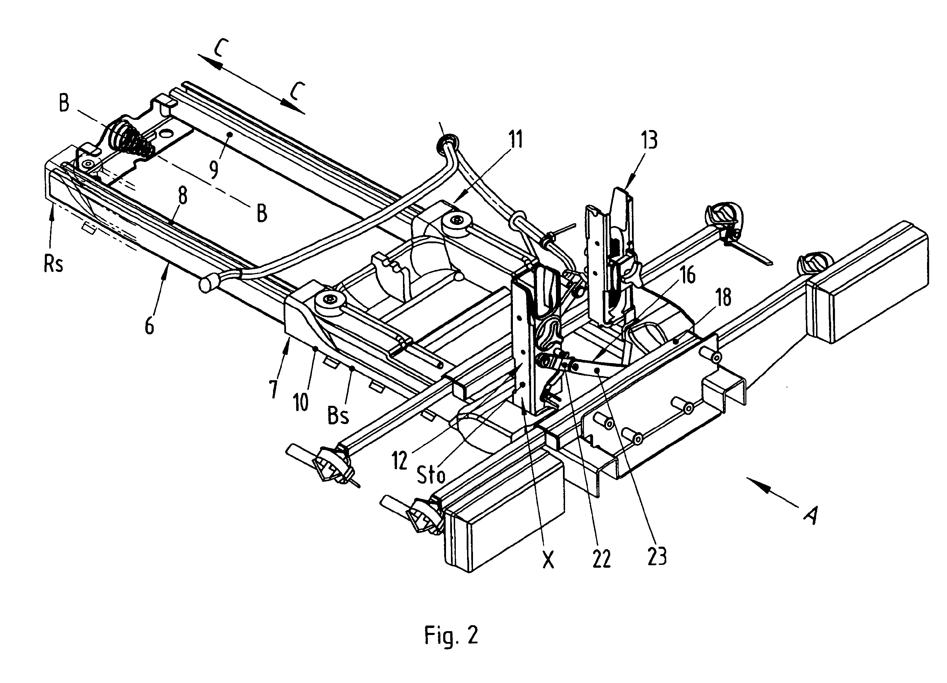

Von einem Personenkraftwagen 1 ist lediglich ein Heckteil 2 dargestellt, das in einer Mittellängsebene B-B -Fig. 2- eine Öffnung 3 zum Ausfahren einer Trageinrichtung 4 aufweist. Der Trageinrichtung 4 ist zum Transport eines Fahrrads 5 ausgebildet und umfasst einen Grundträger 6 und einen Aufnahmeträger 7 -Fig. 2-, an dem das quer zur Fahrzeuglängsrichtung C-C ausgerichtete Fahrrad 5 gehalten ist. Der Aufnahmeträger 7 ist in Fahrzeuglängsrichtung C-C zwischen einer Ruhestellung Rs und einer Betriebsstellung Bs und vice versa verstellbar ausgeführt -Fig. 2-. Hierzu sind am Grundträger 6 beiderseits der Mittellängsebene B-B innere Führungsschienen 8 und 9 vorgesehen, die mit äußeren Führungsschienen 10 und 11 des Aufnahmeträgers 7 zusammenarbeiten.

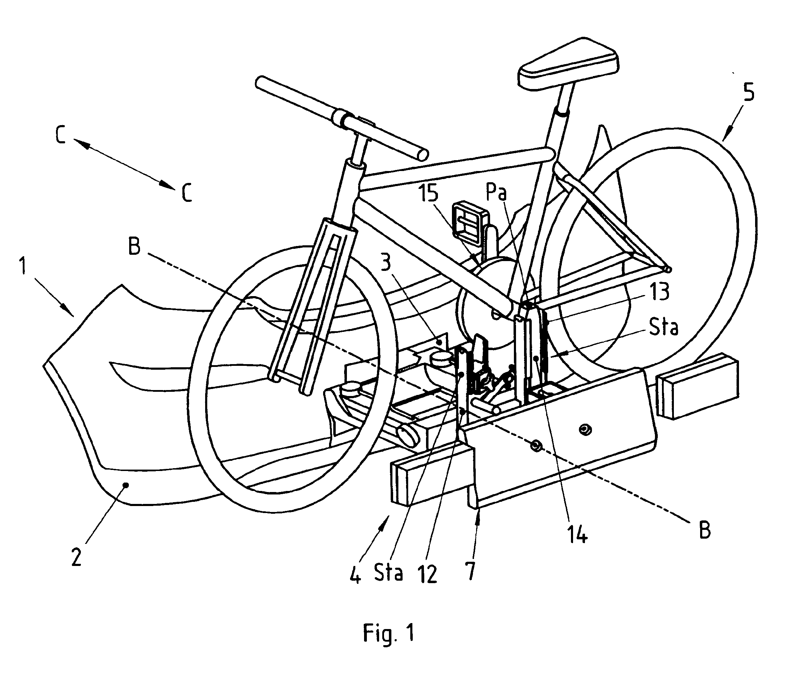

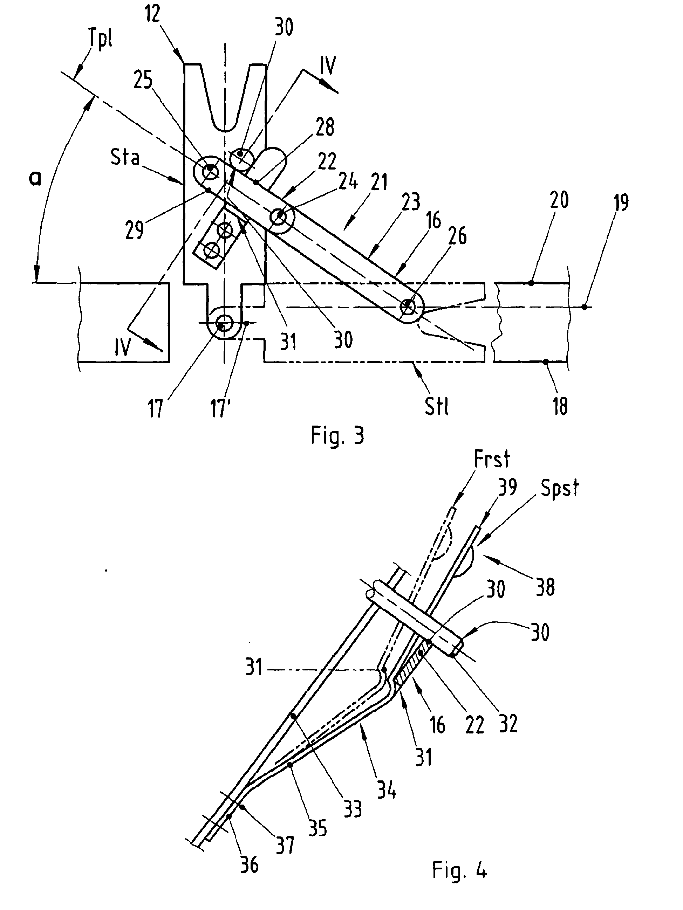

Der Aufnahmeträger 7 ist mit zwei funktionsgleichen hohlen Aufnahmesäulen 12 und 13 für Kurbelarme von Treteinrichtungen von zwei Fahrrädern versehen , wobei im Ausführungsbeispiel lediglich ein Kurbelarm 14 einer Treteinrichtung 15 des Fahrrads 5 in die Aufnahmesäule 13 von oben nach unten eingeführt ist -Fig. 1-. Die Aufnahmesäule 12, in der kein Kurbelarm vorgesehen ist, ist aus einer liegenden Stellung Stl in eine aufrechte Stellung Sta bewegbar -Fig. 3-, und in der aufrechten Stellung Sta ist die Aufnahmesäule 12 mittels einer entriegelbaren Stützeinrichtung 16 festgesetzt.

Die Aufnahmesäule 12 ist über ein Schwenklager 17 bewegbar, das an einer Rahmenstruktur 18 der Trageinrichtung 4 angeordnet ist, welches Schwenklager 17 eine in Fahrzeuglängsrichtung C-C verlaufende Schwenkachse 17' besitzt. Dabei ist das Schwenklager 17 in der Weise in der Rahmenstruktur 18 der Trageinrichtung 4 vorgesehen ist, dass die Aufnahmesäule 12 in der abgesenkten Stellung Sta weitgehend versenkt -Fig. 3- in besagter Rahmenstruktur 18 untergebracht ist.

Die Stützenrichtung 16 ist zwischen der Aufnahmesäule 12 und der Rahmenstruktur 18 wirksam und verläuft nach Art einer Diagonalstrebe im spitzen Winkel α zu einer Horizontalen 19 -Fig. 3-, die parallel zu einer oberen Begrenzung 20 der Rahmenstruktur 18 ausgerichtet ist. Die Stützeinrichtung 17 wird durch ein Lenkersystem 21 mit einem ersten Lenker 22 und einem zweiten Lenker 23 gebildet. Die Lenker 22 und 23 sind an den einander zugekehrten Enden über ein erstes Gelenk 24 miteinander verbunden. Darüber hinaus ist der erste Lenker 22 unter Vermittlung eines zweiten Gelenks 25 mit der Aufnahmesäule 12 und der zweite Lenker 23 über ein drittes Gelenk 26 mit der Rahmenstruktur 18 verbunden. Die beiden Lenker 22 und 23 weisen unterschiedliche Längen auf, dergestalt, dass der erste Lenker 22 eine geringere Länge aufweist als der zweite Lenker 23.

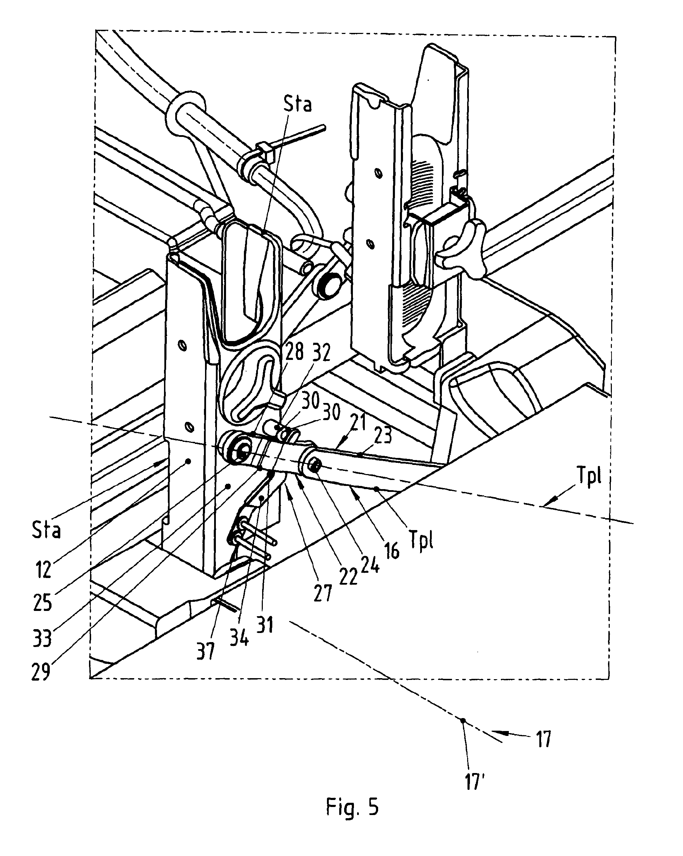

In der aufrechten Stellung Sta der Aufnahmesäule 12 nehmen die beiden Lenker 22 und 23 des Lenkersystems 21 eine gestreckte Totpunktlage Tpl ein, wobei z.B. am ersten Lenker 22 ein Sperrsystem 27 angreift. Das Sperrsystem 27 ist im Ausführungsbeispiel an gegenüberliegenden Längsseiten 28 und 29 des Lenkers 22 wirksam, und es wird durch einen ersten Anschlag 30 und einen zweiten Anschlag 31 gebildet. Der erste Anschlag 30 wird durch einen Zapfen 32 verkörpert, der an einer Wand 33 des Aufnahmeelements 12 in Lage gehalten wird. Der zweite Anschlag 31 ist manuell aus einer Sperrstellung Spst in eine Freigabestellung Frst bewegbar -Fig. 4- und als blattfederähnliches Betätigungsglied 34 dargestellt ist, das mit einem Federabschnitt 35 und einen Lagerabschnitt 36 versehen ist. Der Lagerabschnitt 36 ist unter Vermittlung von Haltemitteln 37 an der Wand 32 der Aufnahmesäule 12 befestigt, und an einer freien Seite 38 des Betätigungsglieds 34 ist ein Handhebel 39 angeformt -Fig. 4-.

## Patentansprüche

1. Trageinrichtung für ein Fahrrad, die in einem Kraftfahrzeug, insbesondere Personenkraftwagen angeordnet ist und eine Aufnahmesäule für einen Kurbelarm einer Treteinrichtung des Fahrrads umfasst, **dadurch gekennzeichnet, dass** die Aufnahmesäule (12 oder 13) aus einer liegenden Stellung ((Stl) in eine aufrechte Stellung (Sta) und vice versa bewegbar ist, wobei die Aufnahmesäule (12 oder 13) zumindest in der aufrechten Stellung (Sta) mittels einer Stützeinrichtung (16) festgelegt ist.

2. Trageinrichtung nach Anspruch 1, **dadurch gekennzeichnet, dass** die Aufnahmesäule (12 und 13) über eine Schwenklager (17) bewegbar ist.

3. Trageinrichtung nach Anspruch 2, **dadurch gekennzeichnet, dass** das Schwenklager (17) der Aufnahmesäule (12 und 13) an einer Rahmenstruktur (18) der Trageinrichtung (14) angeordnet ist.

4. Trageinrichtung nach den Ansprüchen 2 und 3, **dadurch gekennzeichnet, dass** eine Drehachse (17') des Schwenklagers (17) in Fahrzeuglängsrichtung (B-B) ausgerichtet ist.

5. Trageinrichtung nach den Ansprüchen 1 und 4, **dadurch gekennzeichnet, dass** die Aufnahmesäule (12 oder 13) in der liegenden Stellung (Stl) weitgehend versenkt in der Rahmenstruktur (18) angeordnet ist.

6. Tragenrichtung nach den Ansprüchen 1 und 2, **dadurch gekennzeichnet, dass** sich die Stützeinrichtung (16) zwischen der Rahmenstruktur (18) und der Aufnahmesäule (12) erstreckt.

7. Trageinrichtung nach Anspruch nach Anspruch 6, **dadurch gekennzeichnet, dass** die Stützeinrichtung (16) in einem Winkel (α) zwischen einer Horizontalen (19) und der Aufnahmesäule (12 oder 13) verläuft.

8. Trageinrichtung nach Anspruch 7, **dadurch gekennzeichnet, dass** die Stützeinrichtung (16) ein wenigstens einen ersten Lenker (22) und einen zweiten Lenker (23) aufweisendes Lenkersystem (21) besitzt, die über ein erstes Gelenk (24) miteinander gekoppelt und über ein zweites Gelenk (15) und ein drittes Gelenk (26) an der Aufnahmesäule (12 oder 13) bzw. an der Rahmenstruktur (18) gelagert sind.

9. Trageinrichtung nach Anspruch 7, **dadurch gekennzeichnet, dass** der erste Lenker (22) mittels des zweiten Gelenks (25) an der Aufnahmesäule (12 oder 13) und der zweite Lenker (23) mit dem dritten Gelenk (26) an der Rahmenstruktur (18) gelagert ist.

10. Trageinrichtung nach Anspruch 9, **dadurch gekennzeichnet, dass** der erste Lenker (22) und der zweite Lenker (23) des Lenkersystems (21) unterschiedliche Längen aufweisen.

11. Trageinrichtung nach Anspruch 10, **dadurch gekennzeichnet, dass** die Länge (LI) des ersten Lenkers (22) kleiner ist als die Länge (LII) des zweiten Lenkers (23).

12. Trageinrichtung nach einem oder mehreren der vorangehenden Ansprüche, **dadurch gekennzeichnet, dass** die Lenker (22 und 23) des Lenkersystems (21) in der aufrechten Stellung (Lst) des Aufnahmeelements (12 oder 13) eine gestreckte Totpunktlage (Tpl) einnehmen.

13. Trageinrichtung nach Anspruch 12, **dadurch gekennzeichnet, dass** in der gestreckten Totpunktlage (Tpl) des Lenkersystems (21) an wenigstens einem der beiden Lenker (22 oder 23) ein Sperrsystem (27) angreift.

14. Trageinrichtung nach Anspruch 13, **dadurch gekennzeichnet, dass** das Sperrsystem (23) an gegenüberliegenden Längsseiten (28 und 29) eines der beiden Lenker (22 oder 23) wirksam ist.

15. Trageinrichtung nach Anspruch 14, **dadurch gekennzeichnet, dass** das Sperrsystem (23) einen ersten Anschlag (30) und einen zweiten Anschlag (31) umfasst.

16. Trageinrichtung nach Anspruch 15, **dadurch gekennzeichnet, dass** der erste Anschlag (30) durch ein an der Aufnahmesäule (12 oder 13) befestigten Zapfen (32) gebildet wird.

17. Trageinrichtung nach Anspruch 15, **dadurch gekennzeichnet, dass** der zweite Anschlag (31) aus einer Sperrstellung (Spst) in eine Entriegelungsstellung (Enst) bewegbar ist.

18. Trageinrichtung nach Anspruch 17, **dadurch gekennzeichnet, dass** der zweite Anschlag (31) an einem blattfederähnlichen Betätigungsglied (34) befestigt ist, das unter Vermittlung eines Lagerabschnitts (36) an der Aufnahmesäule (12 oder 13) gehalten ist.

19. Trageinrichtung nach Anspruch 17, **dadurch gekennzeichnet, dass** an einer freien Seite (38) des Betätigungsglieds (34) ein Handhebel (39) angeformt ist.
